# EUROPÄISCHE PATENTSCHRIFT

(11) **EP 3 527 312 B1**
(45) Veröffentlichungstag und Bekanntmachung des Hinweises auf die Patenterteilung: **15.02.2023**
(21) Anmeldenummer: 18157116.7
(22) Anmeldetag: 16.02.2018
(51) Int. Cl.: B23B 51/10

(54) **ENTGRATWERKZEUG ZUR ENTGRATUNG VON QUERAUSNEHMUNGEN, DIE VON EINER HAUPTBOHRUNG AUSGEHEN**
DEBURRING TOOL FOR DEBURRING TRANSVERSE RECESSES RUNNING OUT OF A MAIN BOREHOLE
OUTIL D'ÉBARBAGE DESTINÉ À ÉBARBER DES ÉVIDEMENTS LATÉRAUX, LESQUELS SORTENT D'UN ALÉSAGE PRINCIPAL

(43) Veröffentlichungstag der Anmeldung: 21.08.2019
(73) Patentinhaber: HEULE Werkzeug AG, 9436 Balgach (CH)
(72) Erfinder: Studer, Harry, 9436 Balgach (CH)
(74) Vertreter: Riebling, Peter

(56) Entgegenhaltungen:
- WO-A1-2016/135283
- DE-A1- 19 711 206

## Beschreibung

Die Erfindung betrifft ein Entgratwerkzeug zur Entgratung von Querausnehmungen in einer Hauptbohrung nach dem Oberbegriff des Patentanspruches 1 und ein Verfahren zum Betrieb eines Entgratwerkzeuges zur Entgratung von Kanten von Querausnehmungen nach dem Oberbegriff des Patentanspruches 9.

Mit dem Gegenstand der WO 2016/135283 A1 sind ein solches Verfahren und ein solches Entgratwerkzeug bekannt geworden, welches sich dadurch auszeichnet, dass ein erstes Schneidensegment der Schneidkante und ein zweites Schneidensegment der Schneidkante vorhanden sind, die an den jeweiligen Endbereichen der Schneidkante angeordnet sind, wobei das erste Schneidensegment einen ersten Keilwinkel aufweist und das zweite Schneidensegment einen zweiten Keilwinkel und die beiden Keilwinkel räumlich versetzt zueinander angeordnet sind.

Nachteil eines solchen bekannten Entgratwerkzeuges ist, dass eine Entgratung der Ausnehmungskanten der Querausnehmungen, welche die Hauptbohrung schneiden, nur ungenügend gelingt, weil die Schneidkanten nicht schräg zur Längsachse der Hauptbohrung gestellt sind und daher keinen schälenden Schnitt im Bereich der Ausnehmungskanten der Querausnehmungen anbringen, welche mit der Hauptbohrung schneiden und in diese hinein verlaufen.

Es findet demnach kein schälender spanabhebender Schnitt an den durch das Bohr- oder Fräswerkzeug aufgeworfenen Graten der statt, sondern lediglich eine Schlagbewegung, welche Rattermarken an den Rändern der zu entgratenden Querausnehmung anbringen, was als nachteilig empfunden wird.

Das bekannte Entgratwerkzeug konnte sowohl im Rechts- als auch im Linkslauf betrieben werden, um eine Entgratung auszuführen.

Somit besteht der Nachteil, dass die erste Kante einer Ausnehmung im Rechtslauf des Werkzeuges entgratet werden muss und die gegenüberliegende Kante der gleichen Ausnehmung im Linkslauf entgratet werden muss, was mit einem erhöhten Arbeitsaufwand verbunden ist.

Mit der DE 25 25 872 B2 ist ein anderes Entgratwerkzeug zur spanabhebenden Bearbeitung des Öffnungsrandes von Bohrungen bekannt, bei dem ein drehend angetriebener Schaft mit einer am Schaft in einer radialen Nut gehaltenen, bewegbaren Schneidkörperanordnung, mit mindestens zwei kegelförmig gegeneinander gestellten Schneiden vorhanden ist, wobei die an getrennten Schneidkörpern angeordneten Schneiden federbelastet in radialer Richtung im Messerfenster des Schafts geführt sind.

Ein solches Entgratwerkzeug ist nur für die Entgratung von Bohrungen in einer Hauptbohrung geeignet und nicht zur Entgratung der Umfangsrändern von quer zur Hauptbohrung verlaufenden Querausnehmungen.

Die in den Druckschriften DE 25 25 872 B2, DE 25 59 145 A1 und DE 26 49 208 C3 genannten Erfindungen geben keinen Hinweis auf die erfindungsgemäße Aufgabe und deren Lösung.

In allen diesen Schutzrechten ist die Schneidengeometrie zur Entgratung von Querausnehmungen, welche an die Hauptbohrung angrenzen, ungeeignet:
a) Die Schneiden wirken alle nur in einer Rotationsrichtung (in der Regel Rechtslauf) und vermögen die Querausnehmungsränder nicht umlaufend zu entgraten.
   Die dort gezeigten Messer weisen alle einen Freiwinkel auf, der sie im Linkslauf als nicht schneidend charakterisiert.
b) Die Schneiden sind nicht - wie bei der Erfindung - stetig konvex und bogenförmig ausgebildet, was ein schälendes Schneiden bei gleichzeitigem Austreiben der Messers aus der Querausnehmung verhindert.

Die Schneidenformen, wie sie in der DE 25 25 872 B2 und der DE 25 59 145 A1 dargestellt sind, führen beim Einsatz für die Entgratung von Querausnehmungen sogar unweigerlich zum Messerbruch, wenn die Entgratung von der Hauptbohrung aus erfolgt.

Bei der DE 26 49 208 C3 wird zwar das Entgraten der Kanten von Durchgangsbohrungen erwähnt; diese Messerform weist jedoch ebenfalls die oben aufgeführten Nachteile auf. Zusätzlich wirken die Messer bei dieser Druckschrift diametral gegenüberliegend und sind über die Wippe kinematisch gekoppelt. Das führt zum weiteren Nachteil, dass ein Messer an der der Querausnehmung gegenüber liegenden Hauptbohrungswandung mit der Gleitfläche anliegt und das andere Messer über diese mechanische Kopplung am Eindringen in die Querausnehmung hindert. Diese Art der Durchdringungsentgratung vermag bestenfalls den Grat auf Höhe der Wandung der Hauptbohrung abzutrennen, wobei in der Praxis ein Teil des Grates in die Querausnehmung gedrückt wird und die Entgratung nur unvollständig ausgeführt wird.

Die DE 197 22 206 A1 offenbart ein Entgratwerkzeug, bei dem ein Messer verschiebbar in einem Messerfenster eines Werkzeughalters geführt ist.

Der Erfindung liegt deshalb ausgehend von der WO 2016/135283 A1 die Aufgabe zugrunde, ein Entgratwerkzeug der eingangs genannten Art so weiterzubilden, dass die Qualität der Entgratung an den Ausnehmungskanten einer Querausnehmung, welche die Hauptbohrung schneidet, besser ist und dass eine schnellere Entgrataktion stattfinden kann.

Zur Lösung der gestellten Aufgabe ist die Erfindung durch ein Entgratwerkzeug nach Patentanspruch 1 und ein Verfahren zum Betrieb eines Entgratwerkzeuges zur Entgratung der Kanten von Querausnehmungen nach Patentanspruch 9 gekennzeichnet.

Die Nachteile der Entgratwerkzeuge nach dem Stand der Technik werden durch die neuartige Schneidenform behoben.

Damit ergibt sich der Vorteil, dass eine Entgratung von Querausnehmungen von der Hauptbohrung ausgehend stattfinden kann, was im Gegensatz zu einem Stand der Technik nach der WO 2016/135283 A1 ist.

Mit der gegebenen technischen Lehre ergibt sich der Vorteil, dass wegen der schräg gestellten, bogenförmigen Schneiden - im Gegensatz zum Stand der Technik, wo senkrechte Schneidflächen vorhanden waren - nunmehr die erfindungsgemäßen einander gegenüberliegenden Schneiden einen schälenden Schnitt entlang den Ausnehmungskanten der Querausnehmung durchführen. Es ist vorteilhaft, dass die Schneiden stetig gekrümmt und durchgehend gestaltet sind und nicht - wie bei der WO 20161135283 A1 - in Segmente unterteilt sind.

Der Begriff "durchgehend" bedeutet, dass sich die jeweilige Schneide stetig und bogenförmig konvex über die gesamte schneidende Oberfläche des Schneidmessers - vorzugsweise über dessen Seitenwand - erstreckt und nicht segmentiert ist.

Durch die bogenförmige und bevorzugt konvexe Ausbildung wird ein etwa mittiger Scheitelpunkt bzw. eine Scheitelzone gebildet, um den metallischen Grat am Umfangsrand der Querausnehmung an einer bestimmten Stelle mit einer bestimmten Winkelumdrehung des Schaftes erfindungsgemäß abzuschlagen. Die bogenförmig konvex und stetig durchgehend gestalteten Schneiden ermöglichen, dass das Messer kontinuierlich an den Rändern der Querausnehmung entlang fährt und jeweils dort in einem bestimmten Umfangsbereich der Querausnehmung aufgrund einer kurzen Winkeldrehbewegung des Schaftes mit einem schälenden Schnitt den dort vorhanden Grat entfernt.

Der Werkzeugschaft ist drehend angetrieben und bewegt sich in axialer Richtung zentrisch oder auch azentrisch in der Mittenachse der Hauptbohrung mit einer Vorschubgeschwindigkeit von bevorzugt 600mm/min fort.

Eine azentrische (außerhalb der zentrischen Mittenachse der Hauptbohrung und radial versetzt zur Hauptbohrung) Einführung des Werkzeugschaftes in die Hauptbohrung und ein dementsprechender Vorgang der Entgratung sind ebenfalls möglich. Dabei kann allerdings nur ein radial beschränkter Segmentbereich der Querausnehmungen am Umfang der Hauptbohrung erreicht und entgratet werden, was bei bestimmten Anwendungsfällen bevorzugt sein kann.

Der einfacheren Beschreibung wegen wird in der folgenden Beschreibung jedoch von einem zentrisch in die Hauptbohrung eingeführten Entgratungswerkzeug ausgegangen, obwohl die Erfindung nicht darauf beschränkt ist.

Der Schaft ist bevorzugt kontinuierlich drehend angetrieben und dreht sich vorzugsweise mit einer Umdrehungszahl im Bereich zwischen 1 UPM bis 1000 UPM.

Solche Entgratwerkzeuge werden für die Entgratung der Querausnehmungen an den Innenwänden der Hauptbohrung für Durchmesser von Hauptbohrungen im Bereich zwischen 4 mm bis 30mm bevorzugt verwendet. Die axiale Länge eines solchen Entgratwerkzeuges liegt im Bereich zwischen 50mm bis 350mm.

Das eine Messer oder die mehreren Messer stehen radial zwischen 0,25 mm und 0,50 mm über den Bohrdurchmesser der Hauptbohrung und über den Außendurchmesser des Messerfensters des Entgratwerkzeuges hinaus und werden beim Einfahren in die Hauptbohrung um diesen Betrag federbelastet in das jeweilige Messerfenster des Entgratwerkzeugs zurück gedrückt, um dann beim Erreichen einer Querausnehmung in der Innenwand der Hauptbohrung um diesen Betrag radial auswärts aus dem Messerfenster federbelastet heraus gedrückt zu werden, um dadurch die Umfangsränder der Querausnehmung zu entgraten. Bei den beispielhaft angegebenen radialen Größenangaben zwischen 0,25 und 05 mm handelt es sich demnach um den radialen Arbeitshub eines oder mehrerer Messer.

Nach Ausführung der ersten Winkeldrehbewegung, mit der an einer bestimmten Stelle des Umfangsbereiches der Hauptbohrung eine erste Entgrataktion stattfand, bewegt sich der Werkzeugschaft bei einem gleichzeitigen axialen Vorwärtsschub um eine zweite kurze Winkeldrehbewegung des Schaftes weiter und damit heben die Entgratmesser vom Rand der Querausnehmung ab und bewegen sich mit einer weiteren Drehbewegung des Schaftes an einer anderen Stelle am Umfang der Wandung der Hauptbohrung in die Querausnehmung hinein, um an dieser weiteren Stelle am Rand der Querausnehmung mit einer zweiten Entgrataktion den dort vorhandenen Grat zu entfernen.

Wenn nämlich nach dem Stand der Technik die Schneide des Entgratwerkzeugs segmentiert wäre, gelingt das Herausziehen des Schneidmessers aus der Querausnehmung nur schlecht, weil die Segmente möglicherweise die bereits schon entgrateten Ausnehmungskanten der Querausnehmung wieder zurückverformen und neue metallischen Grate aus dem Metallmaterial heraus schlagen, was vermieden werden soll.

Die Erfindung ist deshalb nicht auf die Anordnung eines ersten und zweiten Keilwinkels gemäß der WO 2016/135283 A1 angewiesen und ebenso nicht auf einen dazwischen liegenden Freiwinkel, weil die Steuerfläche im Idealfall um 90° zur Werkzeugachse orientiert sein muss, so dass die Schneiden über den ganzen Bogen für Rechts- und Linkslauf gleichzeitig kontinuierlich schneidend wirken.

Das Verfahren der Entgratung ausgehend von der Hauptbohrung erübrigt die Freiwinkel am Messer, wie beim Stand der Technik bekannt, weil die Freiwinkel aus der Positionierung der Schneide und der Entgratkontur entsprechend dem Verschneidungswinkel 25 entstehen.

Es wird auch auf ein drittes Schneidensegment, wie beim Stand der Technik, verzichtet. Das Vorhandensein eines solchen dritten Schneidensegmentes würde bei dem erfindungsgemäßen Entgratungsverfahren ausgehend von der Hauptbohrung den stetigen Bewegungsablauf der Bogenschneide stören, dabei das Messer aus dem Schnitt nehmen und die Entgratqualität beeinträchtigen.

Vorteilhaft ist noch, dass die Entgratung im Bereich der die Hauptbohrung schneidenden Querausnehmungen von der Hauptbohrung aus erfolgt und nicht umgekehrt - wie beim Stand der Technik - radial von der Querausnehmung ausgehend aus in Richtung auf die nicht bearbeitete Hauptbohrung.

Hier liegt ein Unterschied zum Stand der Technik, weil der Stand der Technik die Ausnehmungskanten der Querausnehmungen von außen her entgratet, während die vorliegende Erfindung die Entgrataktion vorzugsweise von der Hauptbohrung aus radial auswärts in Richtung auf die dort sich schneidenden Ausnehmungskanten der Querausnehmung vornimmt.

Zwar beschreibt die genannte Druckschrift auch eine Entgrataktion von der Hauptbohrung aus in Richtung auf die radial sich ansetzende Querausnehmung, was jedoch nur mit einem segmentierten Schneidelement gemacht wird, was zu einer Beschädigungsgefahr der die Hauptbohrung schneidenden Ausnehmungskanten führt.

Vorteilhaft ist, dass die Schneide des Messers kontinuierlich und stetig ausgebildet ist und nicht in zwei getrennte Schneidkanten unterteilt ist, die räumlich zueinander versetzt sind.

Die räumlich zueinander versetzt angeordneten Schneidkanten beim Stand der Technik setzen nämlich eine erste Entgrataktion im Linkslauf und eine zweite Entgrataktion im Rechtslauf voraus, was gerade bei der Erfindung vermieden wird. Bei der Erfindung schneiden die beiden diametral gegenüberliegenden Schneidkanten gleichzeitig sowohl im Rechtslauf als auch im Linkslauf.

Im Folgenden wird die Erfindung anhand von mehreren Ausführungswegen darstellenden Zeichnungen näher erläutert. Hierbei gehen aus den Zeichnungen und ihrer Beschreibung weitere Merkmale und Vorteile der Erfindung hervor.

Es zeigen:
- Figur 1:: ein erstes Ausführungsbeispiel, wie von einer Hauptbohrung ausgehend Querausnehmungen entgratet werden können
- Figur 2:: ein zweites Ausführungsbeispiel
- Figur 3:: ein drittes Ausführungsbeispiel
- Figur 4:: ein viertes Ausführungsbeispiel
- Figur 5:: eine perspektivische Ansicht des Entgratwerkzeuges nach der Erfindung
- Figur 6:: ein Schnitt durch das Entgratwerkzeug nach Figur 5
- Figur 7:: die perspektivische Darstellung des Entgratmessers
- Figur 8:: die um 90° gedrehte Ansicht nach Figur 7 mit Draufsicht auf die Schneide
- Figur 9:: eine um 90° weiter gedrehte Ansicht des Entgratmessers
- Figur 10:: eine gegenüber Figur 9 gedrehte Ansicht, um die Spanwinkel kenntlich zu machen
- Figur 11:: eine räumliche perspektivische Darstellung des Schneidmessers mit einem zusätzlichen Merkmal
- Figur 12:: eine Ausführungsvariante des Werkzeuges mit zwei zueinander parallelen Entgratmessern
- Figur 13:: eine gegenüber Figur 12 abgewandelte Ausführungsform, bei der zwei einzelne Messer seriell übereinander liegend angeordnet sind
- Figur 14:: eine perspektivische Darstellung des Entgratvorganges des Entgratmessers beim Entgraten der Ausnehmungskanten einer Querausnehmung
- Figur 15:: ein gegenüber Figur 14 abgewandeltes Ausführungsbeispiel, bei dem statt einer zylindrischen Bohrung gemäß Figur 14 nunmehr eine Längsausnehmung entgratet wird

Entgratet werden beliebige Ausnehmungen 3 im Bereich ihrer Ausnehmungskanten 4 mit der Hauptbohrung 2 im Werkstück 1 entlang der Hauptbohrung 2, welche die Hauptbohrung in beliebiger Form und Winkel schneiden bzw. durchdringen.

Das Entgratwerkzeug 7 arbeitet durch die Hauptbohrung 2, d.h. das Messer 10 arbeitet von der Hauptbohrung 2 ausgehend in die Ausnehmungen 3 hinein.

Das Hauptmerkmal dieser Entgrataufgaben ist, dass die Ausnehmungskanten 4 immer am Zylinder der Hauptbohrung 2 angeordnet sind und diese schneiden und dadurch für das durch die Hauptbohrung 2 arbeitende Entgratwerkzeug 7 immer erreichbar sind.

Sehr viele Werkstücke in der Automotive- und Maschinenbauindustrie besitzen so genannte Hauptbohrungen 2 in die seitlich mehrere, sogenannte Nebenbohrungen 3 oder "Neben"-Ausnehmungen dringen. Dies sind z.B. Ventilgehäuse, Antriebs- und Abtriebswellen und viele mehr. Der Vorteil dieses Werkzeugkonzepts ist, dass durch die Hauptbohrung 2 arbeitend alle an dieser Hauptbohrung anliegenden Ausnehmungen 3 mit dem Vorschub des Entgratwerkzeuges fortschreitend in Serie mit dem drehend angetriebenen Entgratwerkzeug 7 entgratet werden können.

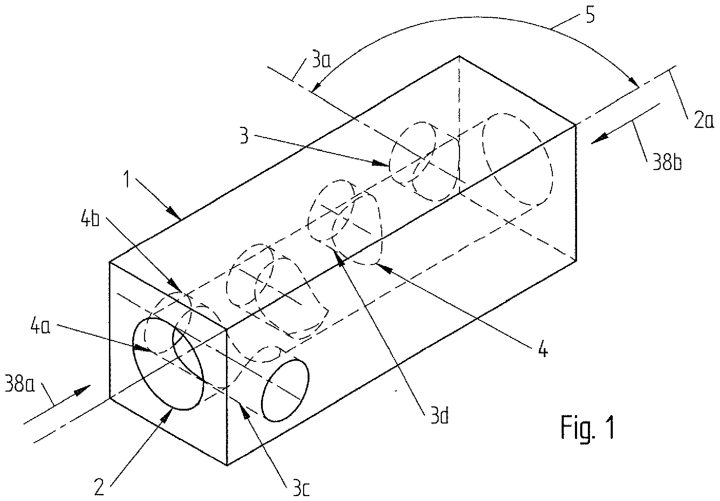

Beispiele solcher Ausnehmungen sind in Fig. 1 gezeigt:
Die Ausnehmungen 3 können in Form von Querausnehmungen ausgebildet sein, deren Ausnehmungsachse 3a zur Hauptbohrungsachse 2a in einem Winkel 5 von 90° verlaufen und die Hauptbohrung 2 durchdringen. Es gibt auch Ausnehmungen 3d die versetzt zur Hauptbohrungsachse 2a verlaufen. Ebenso Ausnehmungen 3c, welche die Hauptbohrung 2 versetzt und vollständig durchdringen, also über sie hinaus verlaufen.

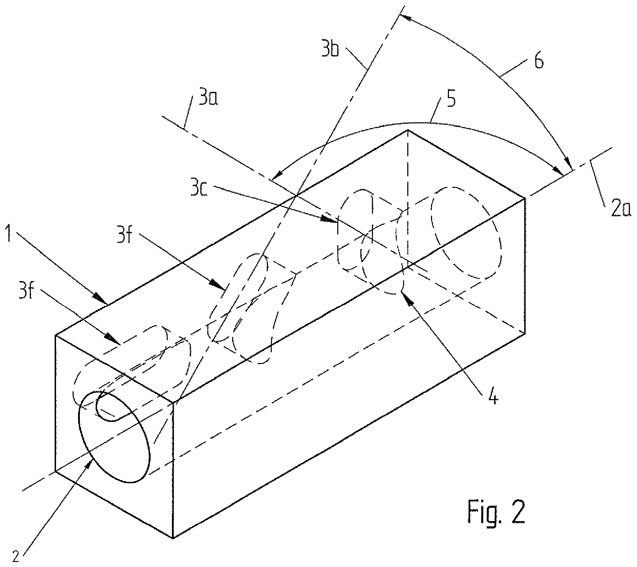

Weitere Beispiele für die mögliche Form von Ausnehmungen sind in Fig. 2 gezeigt:
Weitere Ausnehmungen 3c können in Form von Langlöchern ausgebildet sein, deren Ausnehmungsachsen 3a in einem Winkel 5 von 90° zur Hauptbohrungsachse 2a liegen. Ebenso können Langlochausnehmungen 3f, deren Ausnehmungslage 3b in einem beliebigen Winkel 6 bis parallel zur Hauptbohrungsachse 2a verlaufen, vorhanden sein.

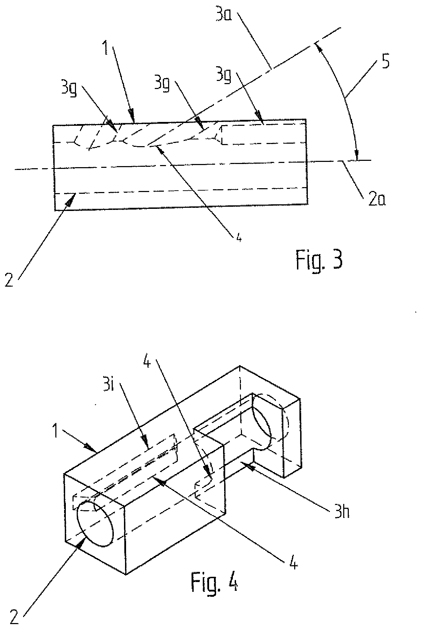

Weitere Beispiele für die mögliche Form von Ausnehmungen sind in Fig. 3: gezeigt:
Die Ausnehmungen 3g können in Form von Querbohrungen ausgebildet sein, deren Ausnehmungsachsen 3a zur Hauptbohrungsachse 2a unter einem beliebigen Winkel 5 bis hin zu parallel verlaufen und die Hauptbohrung 2 durchdringen.

Weitere Beispiele für die mögliche Form von Ausnehmungen sind in Fig. 4 gezeigt:
Die Ausnehmungen 3h können in Form von Fräsnuten ausgebildet sein, welche die Hauptbohrung 2 in einem Winkel von 90° bis hin zu parallel durchdringen. Weitere Ausnehmungen 3i können in Form von Schlitznuten ausgebildet sein, deren gerade verlaufenden Längsachsen zur Hauptbohrung 2 parallel oder in einem beliebigen Winkel liegen.

Nach der Darstellung der verschiedenen Entgrataufgaben und der Möglichkeiten, anhand der Figuren 1 bis 4 werden nachfolgend die Hauptmerkmale des Entgratwerkzeuges in kurz gefasster Form aufgeführt:
1. Messer 10 mit zwei sich in Rotationsrichtung gegenüberliegenden Schneiden 10a und 10b, wirkend für Rechtslauf 12 und Linkslauf 13, welche um dem Winkel 14 im Bereich zwischen 5°bis 45° zur Werkzeugachse 11 schräggestellt sind.
2. Zwei Schneiden 10a und 10b, gebildet aus zwei sich gegenüberliegenden Spanmulden 15a; 15b und einer bogenförmig begrenzenden Steuerfläche 16.
3. Die Orientierung 17 der Steuerfläche 16 steht orthogonal zur Werkzeugachse 11.
4. Eine erste nicht erfinderische Variante: Die zwei sich in Rotationsrichtung gegenüberliegenden Schneiden 10a und 10b wirkend für Rechts- 12 und Linkslauf 13 sind um den Winkel 14 0°bis 5° zur Werkzeugachse 11 schräggestellt.
5. Eine zweite mögliche Variante: Die Orientierung 17 der Steuerfläche ist zwischen 70° und 90° zur Werkzeugachse 11 definiert.
6. Eine Gleiterfläche 21 ist am Scheitelpunkt der Steuerfläche 16 angebracht und weist einen Radius 22 kleiner gleich dem halben Durchmesser der Hauptbohrung 2 auf. Dadurch wird die Bohrungswand vor Texturen durch die Schneiden am Scheitelpunkt geschützt.
7. Der Abstand der zwei sich gegenüberliegenden Spanmulden 15a und 15b beträgt vorzugsweise 0.2mm bis 1mm.
8. Der Spanwinkel 20 der zwei sich gegenüberliegenden Spanmulden 15a und 15b hat vorzugsweise einen Winkel zwischen -20° und 20°.
9. Der Bogenradius 19 der Steuerfläche 16 ist so bemessen, dass der Verschneidungswinkel 25 maximal 45° beträgt, so dass die jeweils wirkende Schneide 10a oder 10b das Messer 10 entlang der Ausnehmungskante 4 radial in Richtung 24 in das Messerfenster 27 einschiebt.
10. Der Scheitelpunkt des in der ausgefederten Position liegenden Messers 10 ragt über den Durchmesser der Hauptbohrung 2 radial maximal um den Betrag der Bogenhöhe 18 der Steuerfläche 16 hinaus.
11. Die Erfindung beansprucht auch ein Verfahren zur Entgratung von beliebig geformten Ausnehmungen 3 entlang der Hauptbohrung 2 beim längsseitigen Durchfahren der Hauptbohrung erstens nur im Rechtslauf 12 und zweitens nur im Linkslauf 13.
12. Ferner beansprucht die Erfindung ein Verfahren zur Entgratung von beliebig geformten Ausnehmungen 3 entlang der Hauptbohrung 2 beim längsseitigen Durchfahren der Hauptbohrung 2 zunächst im Linkslauf 13 und dann im Rechtslauf 12 oder umgekehrt zunächst im Rechtslauf 12 und danach folgend im Linkslauf 13.
13. Die schälend wirkende Schnittbewegung 23 schiebt das Messer 10 radial in Richtung 24 in das Messerfenster 27 hinein und entgratet dessen Ausnehmungskanten.
14. Die zwei gegenüberliegenden Schneiden 10a und 10b entfernen den Grat von beiden Seiten ausgehend vom Zentrum der Ausnehmung 3, 3a-i in Richtung zu den Ausnehmungskanten 4.
15. Die zwei gegenüberliegenden Schneiden 10a und 10b entfernen den Grat von beiden Seiten ausgehend von ausserhalb der Ausnehmungskanten 4 in Richtung zum Ausnehmungszentrum.

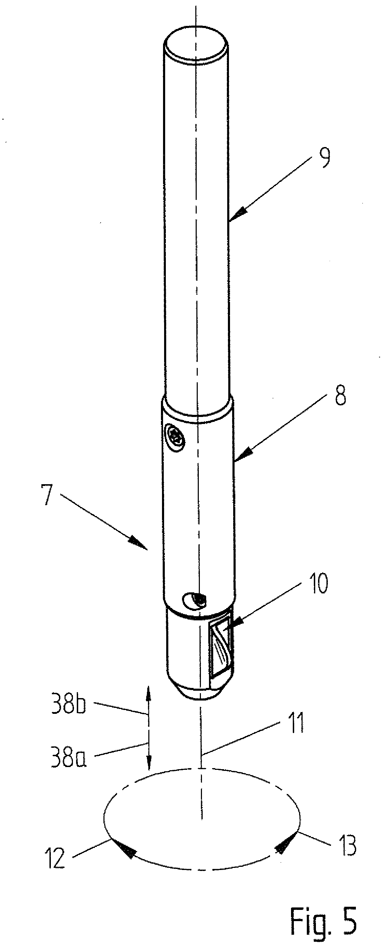

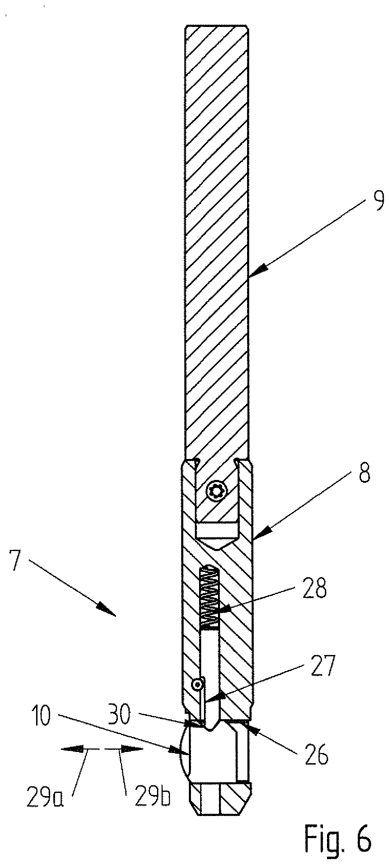

In Figur 5 ist die perspektivische Ausführung eines ersten Ausführungsbeispiels eines Entgratwerkzeuges dargestellt, bei dem an einem drehend angetriebenen Schaft 9, der wahlweise in den Pfeilrichtungen 12 und 13 drehend angetrieben ist, ein Grundkörper 8 befestigt ist, an dessen vorderen freien Ende ein Messerfenster 26 (siehe Fig. 6) vorhanden ist, welches radial zur Werkzeugachse 11 ausgerichtet ist.

Im Bereich des Messerfensters 26 ist das erfindungsgemäße Messer 10 angeordnet, welches gemäß Figur 6 federbelastet in den Pfeilrichtungen 29 radial aus dem Messerfenster 26 herausfahrbar und einfahrbar ist.

Das Ausfahren erfolgt entgegen der Kraft einer Druckfeder 28, die axial auf einen Steuerbolzen 27 drückt, dessen unteres Ende als Steuerfläche ausgebildet ist, die in eine Steuerausnehmung 30 an der Oberseite des Messers 10 eingreift.

Das vordere freie Ende des federbelasteten Steuerbolzens 27 greift in die Steuerausnehmung 30 im Messer 10 ein und hält dieses federbelastet im ausgefahrenen, schneidenden Zustand, wie es in den Figuren 5 und 6 dargestellt ist. Das Messer 10 ist demnach in Figur 5 und 6 in seiner aktiven schneidenden Arbeitsstellung dargestellt. Wenn das Entgratwerkzeug 7 in die Hauptbohrung 2 eingefahren wird, drücken die Bohrungswandungen der Hauptbohrung das Messer 10 zunächst in radialer Richtung einwärts in das Messerfenster 26 hinein, so dass dieses passiv ist und nicht mehr schneidet.

Erst bei weiterem axialen Fortschreiten des drehend angetriebenen Entgratwerkzeuges 7 in die Hauptbohrung 2 gelangt dieses drehend in den Bereich einer Querausnehmung 3, 3a-3i, und dort in den Bereich der Ausnehmungskanten der Querausnehmungen, um diese fortschreitend in Vorschubrichtung des Entgratwerkzeugs 7 zu entgraten.

Anstatt der federbelasteten Verschiebung des Entgratmessers 7 mit einer zugeordneten Druckfeder 28 und einem von dieser belasteten Steuerbolzen 27 können auch andere Rückhalte- oder Vorspannmittel für das Messer 10 verwendet werden. Das Messer kann z.B. mit Hilfe einer Druckflüssigkeit oder einer elastomere Druckfeder in der in Figur 6 dargestellten Ausgangslage gehalten werden und entgegen der Kraft der elastomeren Druckfeder oder der Druckflüssigkeit oder einem anderen Vorspannmittel in die Arbeitsstellung gebracht werden, wie in Figur 5 und Figur 6 dargestellt.

Wichtig ist jedenfalls, dass das Messer 10 durch das Vorspannmittel federbelastet in seiner schneidenden Arbeitsstellung nach Figur 5 und 6 gehalten und beim Eintreten in die Hauptbohrung 2, 2a federbelastet zurückweicht und beim Eintritt in eine an die Wandung der Hauptbohrung 2, 2a anschliessenden Querausnehmung 3, 3a-3i unter der Kraft des Vorspannmittels in die in Fig. 5 und 6 gezeigte aktive, schneidende Arbeitslage verschoben wird.

Es kommt also nicht auf die Verwendung einer Druckfeder 28 mit einem Steuerbolzen 27 an, sondern es können auch andere Vorspannmittel für die Querverschiebung des Messers 10 in den Pfeilrichtungen 29 verwendet werden.

Die zylindrische Druckfeder 28 kann auch durch andere Federarten ersetzt werden. Es können stattdessen beispielsweise Spiralfedern, Tellerfedern oder beliebige hydraulische oder pneumatische Vorspannmittel verwendet werden.

Wichtig ist, dass das Entgratmesser 10 beim Durchtritt durch die Hauptbohrung 2 und beim anfänglichen startenden Eintritt in die Querausnehmung 3 nunmehr am Beginn der Ausnehmungskante 4 ansetzt und aufgrund der erfindungsgemäßen Schrägstellung der Schneidkanten des Messers 10 einen schälenden Schnitt ausführt, wodurch es aufgrund des axialen Vorschubes des Entgratwerkzeuges 7 bei gleichzeitiger Drehung zu einer fortlaufenden kontinuierlichen Entgratung der Ausnehmungskanten im Bereich der jeweiligen Querausnehmung kommt.

Wird das Entgratwerkzeug 7 beispielsweise im Rechtslauf gemäß Drehrichtung 12 drehend in die Hauptbohrung 2 eingefahren, so legt sich das in seiner Arbeitsstellung aus dem Messerfenster 26 in Pfeilrichtung 29 nach links herausgeschobene Messer 10 an beiden Seiten der Ausnehmungskante 4 an.

Im Prinzip legt sich das Messer federbelastet an den Innenumfang der Hauptbohrung 2 an und sobald es in den Bereich der Querausnehmung 3 gelangt, wird der dort an der Kante befindliche Grat abgeschlagen. Danach fällt das Messer 10 in die Querausnehmung hinein und wird radial noch weiter aus dem Messerfenster 26 nach außen verschoben, so lange, bis es mit seiner schrägen Schneidfläche auf der gegenüberliegenden Kante der Querausnehmung aufläuft und dann entgegen der Federkraft des Antriebsmittels, z. B. der Feder 28 wieder zurück in das Messerfenster 26 gedrückt wird, und während dieser Rückdrückbewegung nunmehr auch den Grat an der Querausnehmung auf der gegenüberliegenden Seite der Querausnehmung schälend abschneidet.

Dies wäre ein Vorgang bei z. B. dem Rechtslauf des Entgratwerkzeuges in Drehrichtung 12.

Wird hingegen das Entgratwerkzeug 7 im Linkslauf in Drehrichtung 13 angetrieben, erfolgt der umgekehrte Vorgang, nämlich dass anstatt des Abschlagens der einen Seite des Grates an der Ausnehmungskante der Querausnehmung 3 nunmehr die andere Seite abgeschlagen wird und die gegenüberliegende Seite der Ausnehmungskante in der Querausnehmung 3 nunmehr mit einem schälenden Schnitt abgetragen wird.

Das Messer schneidet demnach erfindungsgemäß auf beiden Seiten und hat nicht auf der einen Seite einen Freiwinkel und auf der anderen Seite eine Schneidfläche, wie beim Stand der Technik.

Bei der Anordnung eines Freiwinkels kann es in nachteiliger Weise vorkommen, dass das Messer, welches zur Entgratung vorgesehen ist, zunächst mit diesem Freiwinkel in die Querausnehmung einfährt und dort keine Entgrataktion durchführt, sondern den dort befindlichen Grat einfach in die Querausnehmung hinein verdrängt, ohne ihn zu entfernen.

Aus diesem Grund ist wesentlich, dass bei der Erfindung nunmehr ein zweiseitig schneidendes Messer 10 vorhanden ist.

Gemäß der vorstehenden Beschreibung wurde betont, dass sich die Schneidfläche des Messers über die gesamte Bogenfläche erstreckt und dass dazwischen nicht schneidende Freiflächen vermieden werden. Es schneiden demnach die stetig sich fortsetzenden Schneide 10 a (für den Rechtslauf) und die Schneide 10b (für den Linkslauf) auf der gesamten Fläche des Entgratmessers 10.

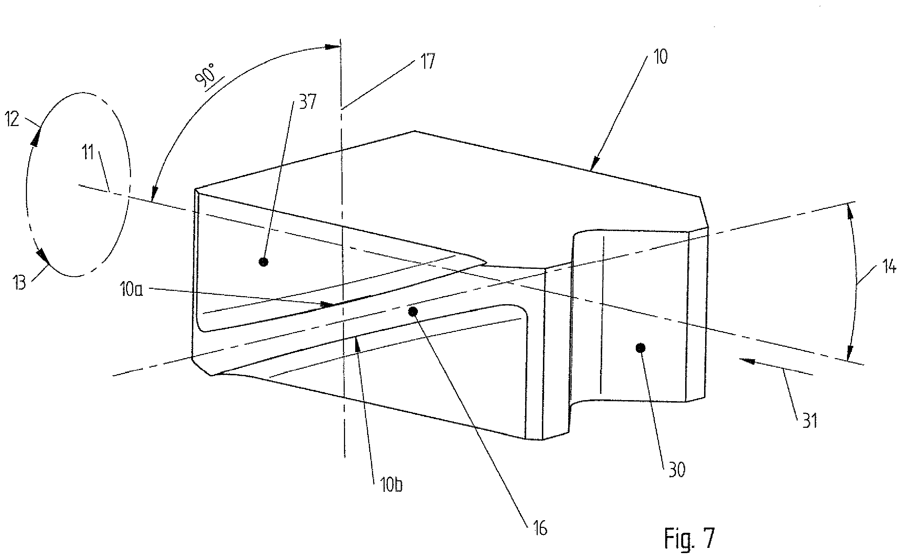

In Figur 7 ist ein solches erfindungsgemäßes Messer 10 dargestellt, bei dem die perspektivische Ansicht auf die Steuerausnehmung 30 gezeigt ist, in welche der in Figur 5 und Figur 6 dargestellte Steuerbolzen 27 eingreift und das gesamte Messer 10 in Pfeilrichtung 31 vorspannt.

Aufgrund dieser Vorspannung wird das Messer 10 in seiner aktiven Betriebslage gemäß Figur 5 und 6 gehalten und wird federbelastet in seine inaktive Stellung in das Messerfenster 26 zurückgeschoben, wenn eine der Schneiden 10a oder 10b auf die Ausnehmungskante 4 der Querausnehmung 3, 3a-3i trifft.

Es wird bevorzugt, wenn die beiden Schneiden parallel zueinander liegen und einen gegenseitigen Abstand zueinander einnehmen und jeweils parallel in einem schrägen Schneidenwinkel 14 zur Werkzeugachse 11 gerichtet sind.

Somit kommt es zu einem schälenden Schnitt im Bereich der Kanten der Querausnehmung 3, 3a-3i, wobei im Rechtslauf die sich über gesamte Länge des Schneidmessers 10 erstreckende Schneide 10a einen schälenden Schnitt ausführt, während im Linkslauf 13 nunmehr die gegenüberliegende parallele, sich über gesamte Länge des Schneidmessers 10 erstreckende Schneide 10b einen schälenden Schnitt an den gegenüber liegenden Kanten der Querausnehmung 3, 3a-3i ausführt.

Vorteilhaft ist, dass sich die Schneiden 10a, 10b ununterbrochen schräg und stetig fortlaufend über die Seitenkante des Messers 10 erstrecken und weder segmentiert noch unterteilt oder unstetig ausgebildet sind.

Aus technischen Gründen erstrecken sich die Schneiden 10a, 10b jedoch nicht über die gesamte Seitenfläche des Messers 10, sondern sie fangen - fertigungstechnisch bedingt - bei einer randseitigen Position 33 an, erstrecken sich bogenförmig jeweils zueinander parallel und im gegenseitigen Abstand über die gesamte Seitenfläche des Messer 10 und gehen bis zur gegenüberliegenden, randseitigen Position 34, die kurz vor dem Ende des Messerkörpers endet und von dort aus in eine nicht näher definierte Abschlusskante 32 übergeht.

Diese Abschlusskante hat keinei Funktion, und sie ist lediglich aus Fertigungsgründen vorhanden.

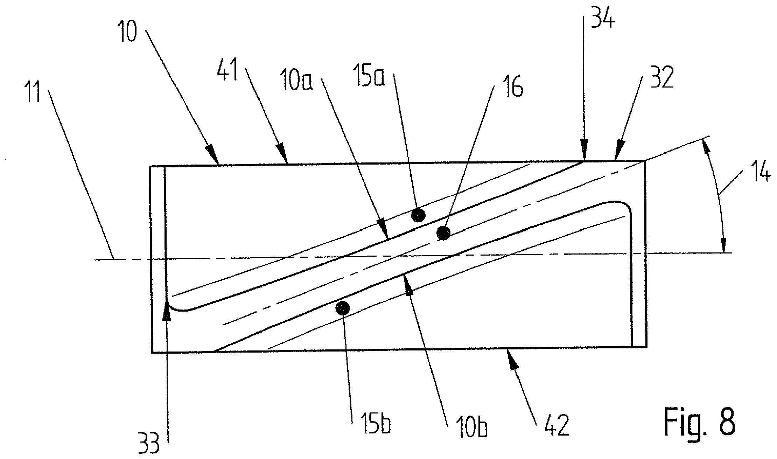

Gemäß den Figuren 7 bis 9 ist zwischen den beiden parallel zueinander verlaufenden Schneiden 10a und 10b eine nicht schneidende konvexe Steuerfläche 16 angeordnet.

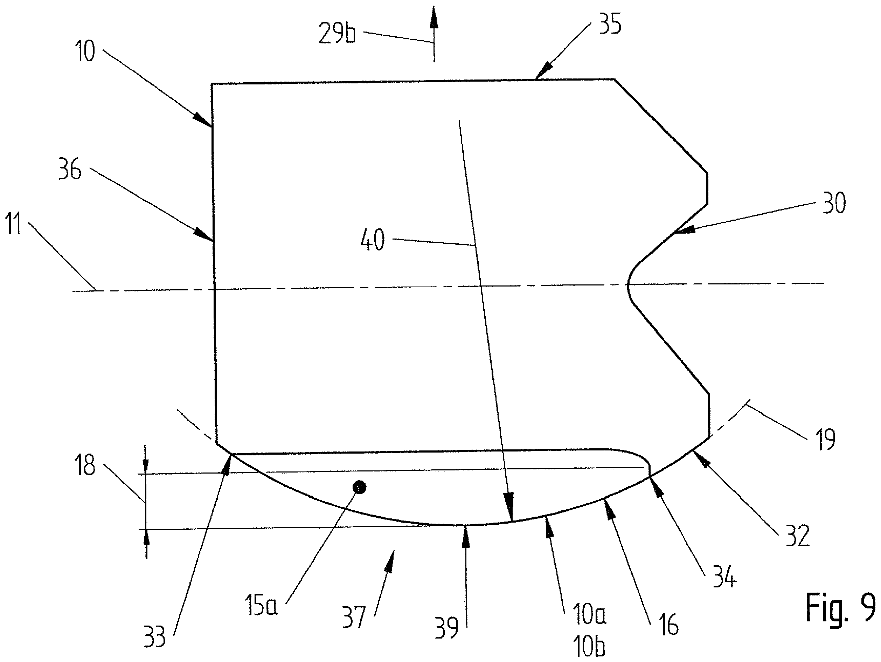

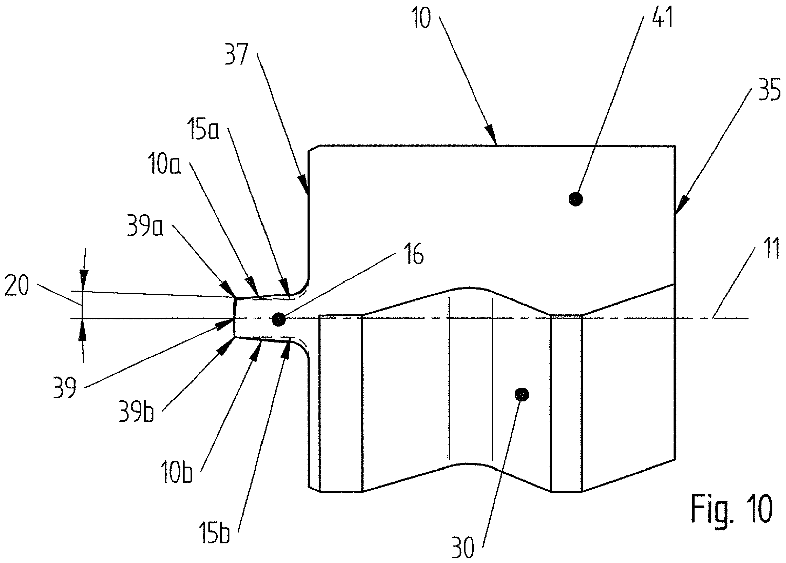

Beide Schneiden 10a und 10b sind demnach Teil einer Steuerfläche 16, die gemäß Figur 9 wulst- oder bogenförmig verläuft, wobei jenseits und diesseits der Steuerfläche 16 die beiden spiegelsymmetrisch zueinander angeordneten Schneiden 10a, 10b gemäß Figur 10 angeordnet sind.

Die beiden Schneiden 10a, 10 b sind also Teil einer bogenförmig vorstehenden, konvexen Steuerfläche 16, die aus Figur 9 zu entnehmen ist und der Schliff der Schneiden 10a und 10b erfolgt senkrecht zur Längsachse und Symmetrieachse der Steuerfläche 16, d. h. es handelt sich um einen geraden Schliff, der auch als Zylinderschliff bezeichnet wird.

Dies ist zum Unterschied zum Stand der Technik, wie aus Figuren 7 bis 9 erkennbar ist, weil sich die Schneiden 10a, 10b annähernd über die gesamte Seitenkante des Messers 10 erstrecken und parallel und im gegenseitigen Abstand zueinander angeordnet sind.

Somit schneiden die Schneiden 10a und 10b über ihre gesamte wirksame Länge, die sich von Position 33 bis Position 34 in Figur 9 erstreckt.

Die Rückseite 35 des Messers - siehe die inaktive Fläche in Figur 9 - hat keinerlei Funktion.

In einer anderen Ausgestaltung der Erfindung kann es vorgesehen sein, dass die Rückseite 35 mit der gleichen identischen Anordnung der Schneiden 10a und 10b gemäß Figur 9 ausgebildet ist, so dass sich ein bezüglich der Werkzeugachse 11 ein vollsymmetrisches (Doppel-)Messer 10 ergibt, wobei dann allerdings die Steuerausnehmung 30, die in Figur 9 auf der rechten Seite des Messerkörpers des Messers 10 gezeichnet ist, auch auf der linken Stirnseite 36 angeordnet sein könnte, um ein Wendemesser zu schaffen, welches nach der Umwendung um 180° gemäß Figur 9 dann mit der gegenüberliegenden Schneidenanordnung an der Rückseite 35 schneiden könnte. Somit kann das hier beschriebene EinfachMesser 10 auch als Doppelmesser ausgebildet sein, welches nach Verschleiss der Schneiden 10a und 10b auf der Vorderseite um 180 Grad gewendet werden kann, damit die an der Rückseite angebrachten weiteren Schneiden 10a, 10b verwendet werden können.

Beim Stand der Technik war es nicht möglich, derartige Wendemesser zu gestalten, wie es die vorliegende Erfindung als Möglichkeit vorsieht.

Die Erfindung sieht nach dem Ausführungsbeispiel nach den Figuren 7 bis 9 aber nur lediglich eine einzige Schneidseite 37 vor, wie in Figur 9 dargestellt, und es ist in einer nicht näher dargestellten Ausführungsvariante möglich, dass diese Schneidseite 37 spiegelsymmetrisch zur Werkzeugachse 11 auch auf der gegenüberliegenden Rückseite 35 angeordnet sein könnte.

Um einen schälenden Schnitt zu erreichen, ist es nach der Erfindung vorgesehen, dass der Schneidenwinkel 14 zwischen 5° und 45° ausgebildet ist. Beim Stand der Technik war hingegen der Schneidenwinkel 14 null Grad, d. h. er erstreckt sich parallel zur Werkzeugachse, was zu dem vorher - in der Beschreibungseinleitung genannten - schlagenden Schnitt führte, der nach der Erfindung vermieden werden soll.

Ein solcher schlagender Schnitt wird nur bei parallel verlaufenden Ausnehmungskanten in unerwünschter Weise erfolgen, während bei schrägen Ausnehmungskanten 4 und Bohrungen ein solcher schlagender Schnitt nicht vorkommt.

Bei der Erfindung wird aufgrund der Anordnung des Schneidenwinkels im Bereich zwischen 5° und 45° auf jeden Fall eine schälende Aktion der Schneiden 10a und 10b entlang der Ausnehmungskante 4 mit fortschreitendem Vorschub des Entgratwerkzeuges 7 in Pfeilrichtung 31 entlang der Hauptbohrung 2 erreicht.

Wesentlich bei der Erfindung ist auch, dass das Entgratwerkzeug 7 gemäß Figur 5 sowohl in Vorschubrichtung 38a nach vorne, aber auch in Rückzugsrichtung 38b nach hinten eine schneidende Aktion ausführt.

Wenn nämlich gemäß Figur 1 in Vorschubrichtung 38a das Entgratwerkzeug 7 in die Hauptbohrung 2 einfährt, wird beispielsweise ein Vorschub in Pfeilrichtung 38a im Rechtslauf 12 vorgenommen, was bedeutet, dass zunächst die in vorderer Richtung zuerst getroffene Ausnehmungskante 4a entgratet wird, bis dann nachfolgend im Rechtslauf 12 auch die sich daran anschließenden Ausnehmungskanten 4b entgratet werden und weitere Ausnehmungskanten, die alle im Bereich der Querausnehmungen 3 angeordnet sind.

Wenn das Entgratwerkzeug 7 dann durch die Hauptbohrung 2 hindurchgefahren ist, wird in Linkslauf (Drehrichtung 13) umgeschaltet, und das Messer 10 wird in Gegenrichtung zur Pfeilrichtung 38a, nämlich in Pfeilrichtung 38b aus der Hauptbohrung 2 herausgefahren.

Wenn noch bezüglich der Hauptbohrungsachse 2a auf der gegenüberliegenden Seite Querausnehmungen 3 vorhanden sein sollten, was in Figur 1 nicht der Fall ist, werden im Linkslauf (Drehrichtung 13) die auf der rechten Seite der Hauptbohrungsachse 2a liegenden Querausnehmungen ebenfalls entgratet, wenn das Entgratwerkzeug 7 in Pfeilrichtung 38b im Linkslauf aus der Hauptbohrung 2 herausgezogen wird.

Hierauf ist die Erfindung jedoch nicht beschränkt.

Es wird aber betont, dass beim Einfahren des Entgratwerkzeuges 7 in der Pfeilrichtung 38a Vorschubrichtung im Rechtslauf 12 auch die links und rechts der Hauptbohrung 2 liegenden Querausnehmungen 3 mit ihren Ausnehmungskanten 4 entgratet werden und nicht nur die links der Hauptbohrung liegenden Querausnehmungen 3.

Es findet nur bei den links und rechts der Hauptbohrung sich anschließenden und mit dieser schneidenden Querausnehmung eine unterschiedliche Entgrataktion statt, je nachdem, ob das Messer nun im Rechtslauf 12 in Vorwärtsrichtung nach 38a oder im Linkslauf 13 in Rückwärtsrichtung in 38b durch die Hauptbohrung 2 gezogen wird.

In jedem Fall findet eine Entgrataktion aller an die Hauptbohrung 2 anschließenden Querausnehmungen 3, 3a-i statt, unabhängig davon, ob diese Querausnehmungen 3, 3a-i sich links- oder rechtsseitig an die Hauptbohrung 2 anschließen oder nicht.

Der Prozess des in Pfeilrichtung 38a im Rechtslauf 12 einfahrenden und in Pfeilrichtung 38b im Linkslauf ausfahrenden Messers 10 fördert lediglich die Entgratqualität des Entgratprozesses aller Querausnehmungen, und ist daher nur eine vorteilhafte Variante, auf welche der Erfindung jedoch nicht beschränkt ist.

Es kommt also nicht darauf an, ob die Ausnehmungen 3, 3a-i links- oder rechtsseitig oder oben oder unten an die Hauptbohrung 2 anschließen. Es handelt sich demnach nur um vorlaufende und nachlaufende Ausnehmungskanten 4a, 4b, die in unterschiedlicher Weise bei einer ersten Betriebsart nur im Rechtslauf oder bei einer zweiten Betriebsart nur einem Linkslauf entgratet werden. Bei der Durchführung nur einer der beiden Betriebsarten kommt es zu einer ungleichmässigen Entgratung der Ränder der Ausnehmungen 3, 3a-i.

Wenn jedoch eine dritte Betriebsart verwendet wird, bei welcher das Entgratwerkzeug 7 im Rechtslauf einwärts läuft und im Linkslauf auswärts läuft, werden alle Ausnehmungskanten 4a, 4b aller Ausnehmungen, 3, 3a-i gleichmäßig entgratet.

Wird hingegen bei der ersten Betriebsart auf einen Zurücklauf in Pfeilrichtung 38b und auf einen Linkslauf 13 verzichtet, werden gleichwohl alle Ausnehmungskanten 4a, 4b aller Querausnehmungen entgratet, jedoch mit unterschiedlicher Formgebung.

Aus Figur 9 ergibt sich auch, dass eine bestimmte Bogenhöhe 18 der Steuerfläche 16 vorhanden ist, wobei die Bogenhöhe 18 in großen Dimensionen veränderbar ist.

Wichtig bei der Erfindung ist demnach, dass es sich bei dem Bogenradius 19 der Steuerfläche 16 und den sich daran unmittelbar anschließenden Schneiden 10a und 10b um stetige konvexe Kurven handelt, weil nur bei der Ausbildung einer bogenförmigen konvexen und stetigen Ausbildung dieser Kurven eine gleichmäßige abschälende Entgrataktion gegeben ist.

Handelt es sich hingegen um unstetige Flächen des Bogenradius 19 mit seiner Steuerfläche 16, würde eine unstetige und schlagende Entgrataktion stattfinden. Es handelt sich bezüglich des Scheitelpunktes 39 um eine vollsymmetrische Steuerfläche 16, die sich gleichmäßig an die linke und rechte Seite des Scheitelpunktes 39 anschließt.

Im Ausführungsbeispiel nach Figur 9 ist als weitere Ausführung angegeben, dass die rechte Seite jenseits des Scheitelpunktes 39 der Steuerfläche 16 und der dort befindlichen Schneiden 10a und 10b kürzer ist als vergleichsweise die sich links an den Scheitelpunkt 39 anschließenden Bereiche der Schneiden 10a und 10b und der dazugehörenden Steuerfläche 16.

Es ist also nicht lösungsnotwendig, dass bezüglich eines symmetrischen Scheitelpunktes 39 die Steuerfläche 16 und die Schneiden 10a und 10b gleich lang und symmetrisch ausgebildet sind.

Daraus ergibt sich, dass der Schneidenradius 40 eine stetige Bogenfläche der Steuerfläche 16 und der unmittelbar parallel und symmetrisch dazu anschliessenden Schneiden 10a und 10b bildet.

im gezeigten Ausführungsbeispiel handelt es sich um teilkreisförmige Schneiden 10a und 10b mit einem bestimmten Schneidenradius 40, worauf die Erfindung jedoch nicht beschränkt ist.

Die Schneiden 10a und 10b können z. B. auch ovalförmig oder parabelförmig ausgebildet sein.

Die Bogenhöhe 18 muss gewährleisten, dass das Messer 10 mit seinem schneidenden Teil, nämlich mit den Schneiden 10a und 10b, sowie mit der dazwischenliegenden nicht-schneidenden Steuerfläche 16 aktiv aus dem Messerfenster 26 herausgefahren werden kann, ohne dass seitliche, nicht-schneidende Teile des Messers 10 mit Teilen des Werkstückes kollidieren.

Die Figur 10 zeigt die Situation nach den Figuren 7 bis 9 in einer anderen Ansicht, wo gut erkennbar ist, dass die etwa bogenförmigen Schneiden 10a und 10b zueinander spiegelsymmetrisch gegenüberliegen, und zwar jenseits der Werkzeugachse 11 und dazwischenliegend der konvexe Bogen der Steuerfläche 16 ausgebildet ist.

Somit steht die Steuerfläche 16 radial über die Schneidseite 37 radial hervor, und die beiden Schneiden 10a und 10b sind spiegelsymmetrisch und mittig zum Mittelpunkt der Steuerfläche 16 ausgebildet.

Die Erfindung ist nicht auf eine spiegelsymmetrische Ausbildung der beiden bezüglich der Werkzeugachse 11 gegenüberliegenden Schneiden 10a und 10b beschränkt.

In einer anderen Ausgestaltung kann es vorgesehen sein, dass die Schneide 10a einen größeren Abstand zur Werkzeugachse 11 als vergleichsweise die Schneide 10b aufweist.

Ebenso kann in einer anderen Ausgestaltung vorgesehen sein, dass die Schneide 10a einen anderen Schneidradius aufweist als vergleichsweise die Schneide 10b.

Sie müssen also nicht zwangsläufig und lösungsnotwendig spiegelsymmetrisch zueinander sein. Aus Fertigungsgründen wird es jedoch bevorzugt, wenn die beiden Schneiden 10a und 10b spiegelsymmetrisch bezüglich der mittigen konvexen Steuerfläche 16 ausgebildet sind.

In Figur 10 ist eine Scheitelfläche 41 als gerade Fläche der Steuerfläche 16 dargestellt. Diese Scheitelfläche 41 ist eine gerade Kurve oder eine gerade Fläche, die allerdings auch konkav ausgebildet sein könnte.

Vorteilhaft ist, dass die erste Anlagefläche des Messers 10 in der Hauptbohrung 2 und danach in der sich quer dazu erstreckenden Querausnehmung 3 bei Position 33 oder 34 erfolgt.

Ebenso könnte sich die nicht-schneidende Abschlusskante 32 an den Innenumfang der Bohrung anlegen, was jedoch keinerlei schneidende Funktion hat. Die Abschlusskante 32 könnte jedoch eine Steuerfunktion ausüben, indem das Messer in Pfeilrichtung 29b federbelastet in das Messerfenster 26 hineinverdrängt wird.

Der Scheitelpunkt 39 der Steuerfläche 16 berührt den Innenumfang der Hauptbohrung 2 nicht, weil es sich um eine bogenförmige Bohrung handelt.

Mit dem Bezugszeichen 20 ist ein Spanwinkel 20 definiert. Der Spanwinkel 20 ist der Winkel der Spanfläche in Richtung zur Schneide 10a und 10b.

Der Spanwinkel 20 ist für das Schneiden verschiedener Werkstoffe wichtig, weil damit die Spanabführung des bei der Schneidaktion entstandenen Materials bestimmt wird. Dies bestimmt auch die Standzeit des Werkzeuges.

An die Schneiden 10a und 10b schließen sich jeweils seitlich Spanmulden 15a und 15b an, um die von den Schneiden 10a und 10b abgehobenen Späne nach außen abzuführen. Es handelt sich also um Spanleitstufen.

Wichtig ist, dass die Steuerfläche 16 in einem Winkel 17 von z. B. 90° zur Werkzeugachse 11 und zur Messerachse steht, weil damit gewährleistet ist, dass das Messer 10 gleichmäßig im Linkslauf und im Rechtslauf schneidet.

Auf der Oberseite 41 des Messers 10 sind keinerlei Bauteile oder Flächen angeordnet, weil diese Oberseite 41 eine Führungsfläche im Messerfenster 26 für die Verschiebeführung darstellt. Dies gilt auch für die Unterseite 42 des Messers 10, weil auch diese Unterseite 42 eine Führungsfläche für die Verschiebeführung im Messerfenster 26 des Entgratwerkzeuges 7 darstellt.

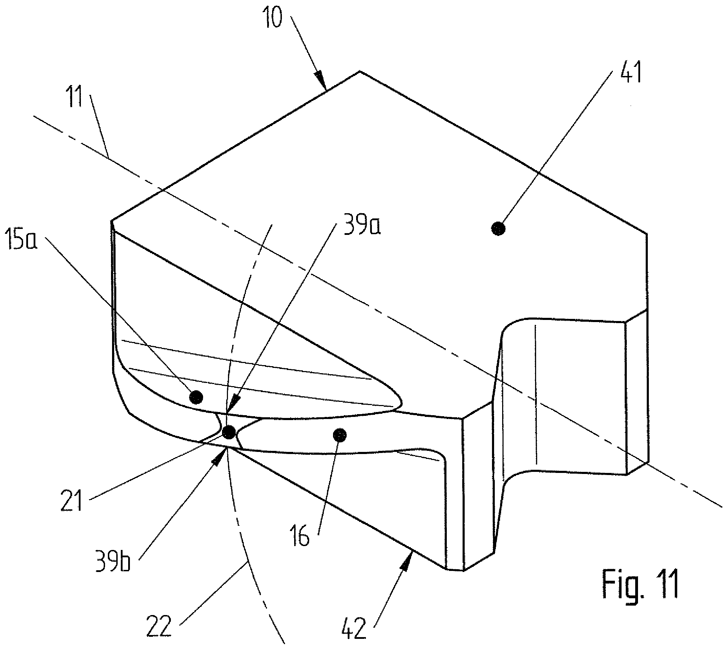

Die Figur 11 zeigt gegenüber der Figur 10 ein abgewandeltes Ausführungsbeispiel, nämlich in der Weise, dass die Steuerfläche 16 zwar durchgehend ist, dass aber im Mittenbereich der Steuerfläche 16 noch eine zusätzliche Gleiterfläche 21 angeordnet ist.

Es handelt sich demnach um den vorher definierten Scheitelpunkt 39, welcher die erste schneidende Aktion im Bereich der jeweiligen Ausnehmungskante 4 im Bereich der Querausnehmung 3 ausführt.

Erfindungsgemäß ist im abgewandelten Ausführungsbeispiel nach Figur 11 genau in diesem Scheitelpunkt 39 eine nicht-schneidende Gleiterfläche 21 angeordnet.

Die Gleiterfläche 21 unterbricht demnach die Bogenform der ansonsten stetig durchlaufenden Schneiden 10a und 10b, weil in diesem Scheitelpunkt 9 nunmehr eine nicht-schneidende Gleiterfläche 21 vorhanden ist, die sowohl die Steuerfläche 16 durchsetzt als auch die Bogenform der Schneiden 10a und 10b.

Im Scheitelpunkt 39 sind also die beiden gegenüberliegenden Schneiden 10a und 10b nicht-schneidend ausgebildet, weil dort die erfindungsgemäße Gleiterfläche 21 ausgebildet ist.

Dies hat den Vorteil, dass eine Verletzung der Hauptbohrung 2 durch die beiden Scheitelpunkte 39a und 39b (siehe Figur 10) der Schneiden 10a, 10b nicht vorkommen kann.

Somit gibt es einen mittleren, im Scheitelpunkt befindlichen nicht-schneidenden Bereich der Schneiden 10a und 10, was jedoch nur ein Ausführungsbeispiel ist, während im anderen Ausführungsbeispiel ein durchgehender, bogenförmiger schneidender Bereich der beiden einander gegenüberliegenden Schneiden 10a und 10b gegeben ist.

In Figur 11 sind die beiden nicht-schneidenden Scheitelpunkte 39a und 39b eingetragen und gemäß diesem Ausführungsbeispiel sind diese zurückversetzt, so dass sie außerhalb des Schneidbereiches der Schneiden 10a und 10b sind.

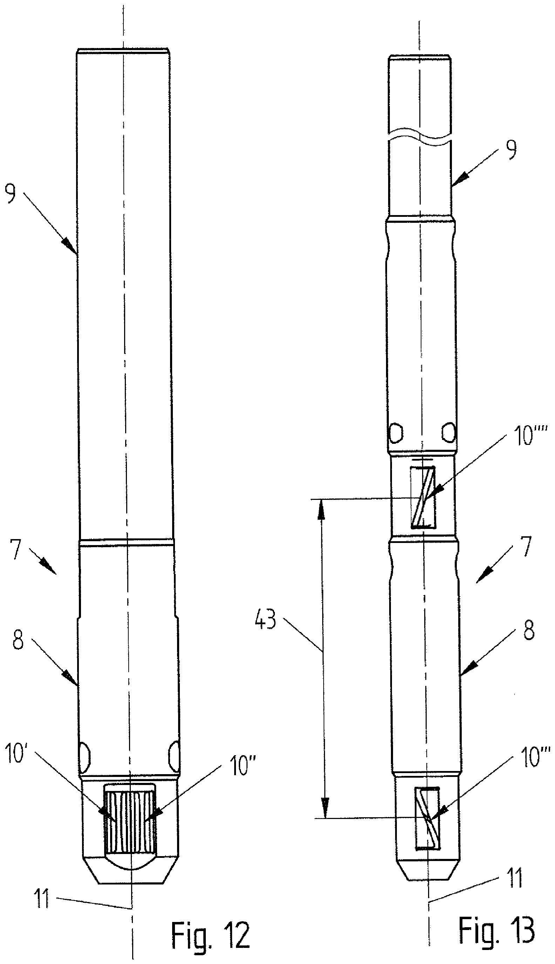

Die Figuren 12 und 13 zeigen weiterführende Ausführungsbeispiele der Erfindung, wobei in diesen Figuren unterschiedliche Schneidmesser 10, 10', 10" dargestellt sind, wobei die dort dargestellten Messer 10 nach sämtlichen Ausführungsvarianten, die vorher beschrieben wurden, ausgebildet sein können.

In Figur 12 ist ein erstes Messer 10' dargestellt, welches Rücken an Rücken mit einem zweiten Messer 10" im Messerfenster 26 angeordnet ist. Es gelten somit alle vorher genannten Beschreibungen - bezogen auf das Messer 10 - auch für die Doppelanordnung von zwei spiegelsymmetrisch zueinander angeordneten Messern 10', 10".

Bei diesem Ausführungsbeispiel sind die schrägen Schneiden 10a und 10b parallel zueinander angeordnet und auf zwei verschiedene Messer verteilt.

Es handelt sich also um eine Tandemanordnung von zwei gleichartig ausgebildeten Messern 10' und 10", die genau parallel und Rücken an Rücken angeordnet sind.

Die beiden Messer 10' und 10" sind von unterschiedlichen Steuerbolzen 27 mit unterschiedlichen Druckfedern 28 beaufschlagt und können somit getrennt voneinander und unabhängig voneinander aus dem Messerfenster 26 heraus und in das Messerfenster 26 hinein unter der Last der verschiedenen Druckfedern 28 verschoben werden.

Es wird bevorzugt, wenn die zueinander parallelen Druckfedern 28 gleich ausgebildet sind, worauf die Erfindung jedoch nicht beschränkt ist.

Vorteil dieser Tandemanordnung ist, dass eine höhere Standzeit gegeben ist und eine bessere Oberflächengüte, weil es zu einem doppelten schälenden Entgratschnitt kommt.

In einer Abweichung des Ausführungsbeispiels nach Figur 12 ist in Figur 13 dargestellt, dass die vorher beschriebenen Messer 10 in allen Varianten, d. h. also auch in der Tandemanordnung der Messer 10' und 10" auch axial übereinander liegend in einem gegenseitigen Abstand 43 angeordnet sein können. Damit läuft das vordere Messer 10‴ in der Hauptbohrung 2 voraus und hat bereits schon einen Teil der in die Hauptbohrung 2 einmündenden Querausnehmungen 3, 3a-i entgratet, während das nachlaufende Messer 10"" nunmehr die Feinarbeit an der Entgratung der Ausnehmungskanten 4 im Bereich der Querausnehmungen 3, 3a-i vornimmt.

Es wird hier auch bevorzugt, wenn die Messer 10, 10', 10", 10‴, 10"" federbelastet durch unterschiedliche, separate Steuerbolzen und Druckfedern 28 im Grundkörper 8 des Entgratwerkzeuges 7 angeordnet sind. Darauf ist die Erfindung jedoch nicht beschränkt.

Es kann in einer anderen Ausgestaltung vorgesehen sein, dass z. B. das eine Messer 10‴ mit nach links geneigten Schneidkanten der Schneiden 10a und 10b ausgebildet ist, während das obere Messer 10"" mit nach rechts geneigten Schneidkanten der Schneiden 10a und 10b ausgerichtet ist.

Dies hat den Vorteil, dass ein schälender Schnitt bei den zu entgratenden Ausnehmungskanten 4 im Vorwärtslauf von dem unteren Messer 10‴ an der vorderen Ausnehmungskante 4 stattfindet und bei dem nachlaufenden Messer 10"" ebenfalls durch die in entgegengesetzter Richtung geneigten Schneiden 10a und 10b. Damit kann die Entgratqualität der Entgratung noch weiter verbessert werden.

Dies bedeutet, dass z. B. bei dem oberen Messer 10ʺʺ der Schneidenwinkel 14 nicht einen positiven Wert hat, wie in Figur 7 dargestellt, sondern einen negativen Wert, der unterhalb der Werkzeugachse 11 liegt.

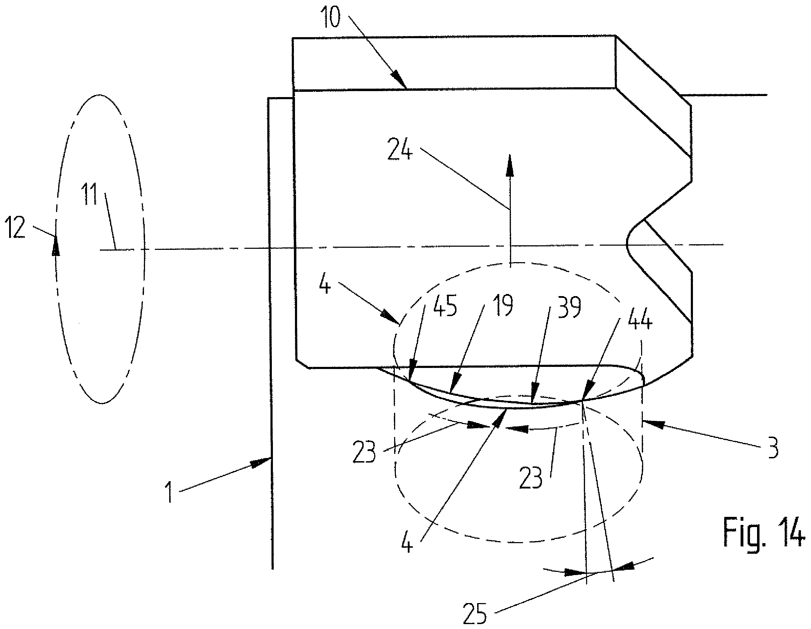

Die Figur 14 zeigt in einem Ausführungsbeispiel die Entgratung einer zylindrischen Querausnehmung. Es ist dargestellt, dass die bogenförmigen Schneiden 10a, 10b zunächst bei dem Vorschub des Entgratwerkzeuges 7 in den Anfang der Querausnehmung 3 einfahren.

Gemäß Figur 14 schneidet sich das Messer 10 schälend in Pfeilrichtung 23 fortschreitend zwischen den Positionen 44 und 45 entlang einer Berührungslinie.

Die Berührungspunkte bei den Positionen 44 und 45 laufen aufeinander zu, und zwar in den Pfeilrichtungen 23, bis dann bei Pfeilrichtung 24 das Schneidmesser 10 aus der Querausnehmung 3 zuerst mit dem Scheitelpunkt 39 herausfährt.

Die Figur 14 zeigt nun, dass ein gewisser radialer Abstand zwischen dem Bogenradius 19 der Steuerfläche und der Ausnehmungskante 4 der zu entgratenden Querausnehmung 3 vorhanden ist.

Bei der Berührung dieser beiden Kurven 19, 4 ergibt sich ein Verschneidungswinkel 25.

Der Verschneidungswinkel 25 darf nicht zu klein sein, es muss also ein Winkel sein, der größer 0 ist, weil es anderenfalls nicht zu einem schälenden Schnitt der Schneiden 10a und 10b entlang der Ausnehmungskante 4 kommt.

Er darf auch nicht größer als 45° sein, jedoch größer als 0, weil anderenfalls ein platter Anschlag der Schneiden 10a und 10b an der Ausnehmungskante 4 geschehen würde.

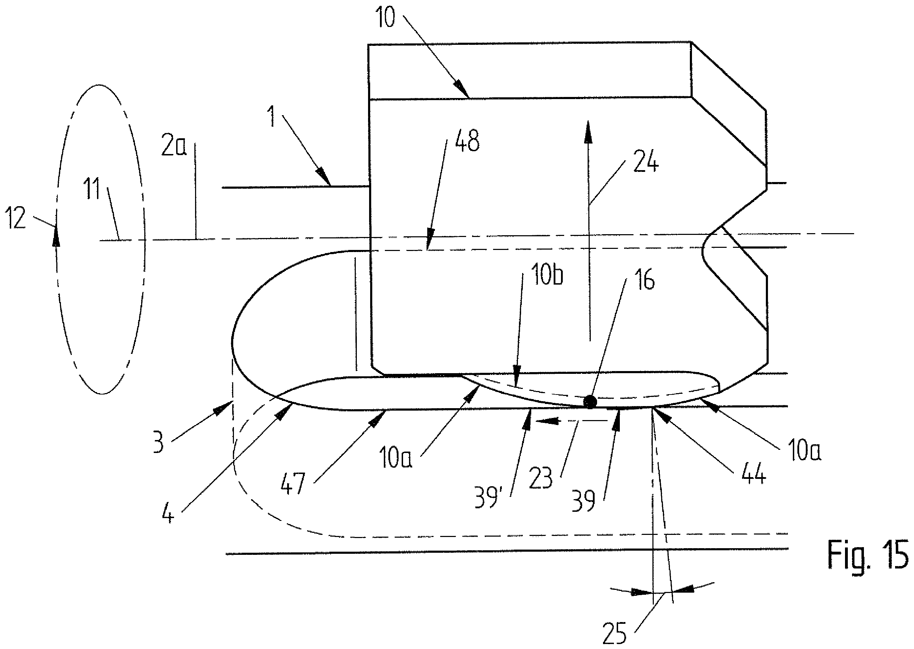

Ein abgewandeltes Ausführungsbeispiel der Figur 14 ist in Figur 15 dargestellt, wo für die gleichen Verhältnisse die gleichen Bezugszeichen gelten. Es sind der Vereinfachung wegen jedoch nicht alle Bezugszeichen für die gleichen Teile eingezeichnet.

Die Figur 15 zeigt jedenfalls, dass anstatt einer zylindrischen Querausnehmung 3 auch nunmehr eine Fräsausnehmung oder ein Langloch in der gleichen Weise entgratet werden kann. Es handelt sich um ein Langloch, dessen Längsachse parallel zur Hauptbohrung 2 und zur Hauptbohrungsachse 2a liegt und somit auch parallel zur Werkzeugachse 11.

Man sieht die vordere Schneide 10a in Seitenansicht und die dahinterliegende Schneide 10b verdeckt, wobei die beiden Schneiden 10a und 10b durch die Steuerfläche 16 räumlich voneinander getrennt sind.

Bei dieser langlochförmigen Querausnehmung 3 gibt es nur noch einen Berührungspunkt mit den Schneiden 10a und 10b bei Position 44 und ein sich hieraus ergebender Verschneidungswinkel 25. Die Schneiden 10a und 10b laufen also schräg mit dem Winkel 14 auf die Ausnehmungskante 4 auf, und es kommt damit zu einer schälenden, spanabhebenden Bewegung der Schneiden 10a und 10b entlang des Randes der Ausnehmungskante 4.

Somit schreitet die Position 44 in Längsrichtung, d. h. in Pfeilrichtung der Schnittbewegung 23 vorwärts.

Aus Figur 15 wird somit klar, dass das Messer 10 mit seinen Schneiden 10a und 10b vom Bereich der Position 44 ausgehend bis zum Scheitelpunkt 39 schneidet und dann mit weiterer Drehrichtung, z.B. im Rechtslauf 12, die Ausnehmungskante 4 verlässt und mit dem Vorschub des Entgratwerkzeuges 7 in Vorschubrichtung 38a, 38b wieder in die Ausnehmung 3 eintritt, jedoch an einer anderen Stelle, z. B. dass der Scheitelpunkt sich nunmehr fortschreitend in der Stellung 39' befindet und dann ebenfalls eine Entgrataktion am Rand der Ausnehmungskante 4 stattfindet, solange, wie mit der nächsten Umdrehung des Messers wiederum der Scheitelpunkt 39' nach links gewandert ist, um so nacheinander folgend und kontinuierlich die Ausnehmungskante 4 zu entgraten.

Die Entgrataktion findet also jeweils ungefähr von Position 44 bis zum Scheitelpunkt 39 statt, bevor dann das Messer 10 den Rand der Ausnehmungskante 4 verlässt und mit einer erneuten Umdrehung des Werkzeuges in Pfeilrichtung 12 in die Querausnehmung 3 eintritt und beispielsweise an der Position 39' eine weitere Entgrataktion bis zur Position 39' stattfindet. Es werden mit dem axialen Vorschub des Entgratwerkzeuges 7 nacheinander folgend die Flächen der Ausnehmungskante 4 in Pfeilrichtung 23 entgratet, wie dies in Pfeilrichtung 23 in Figur 15 dargestellt ist.

Es wurde vorstehend schon erläutert, dass z. B. im Rechtslauf auch beide Kanten 47, 48 der Ausnehmungskante 4 entgratet werden, nur findet an der Vorderkante 47 eine andere abschälende Entgrataktion statt im Vergleich zu der abschlagenden Aktion auf der Rückkante 48. Dies gilt jedoch nur für den Rechtslauf.

Wird hingegen das Entgratwerkzeug 7 im Linkslauf (Pfeilrichtung 13) betrieben, findet die Entgrataktion, die vorstehend anhand der Vorderkante 47 mit der Schälaktion beschrieben wurde, nunmehr an der gegenüberliegenden Rückkante 48 statt, und an der Vorderkante 47 findet die andere, abschlagende Entgrataktion statt.

Auf diese Weise finden jeweils bei einem Links- und Rechtslauf des Entgratwerkzeuges 7 in den Pfeilrichtungen 12 und 13 zwar an beiden Kanten 47 und 48 einer Ausnehmungskante 4 einer beliebigen Querausnehmung 3 Entgrataktionen gleichzeitig statt, jedoch auf unterschiedliche Weise.

### Zeichnungsteaende

1 Werkstück
2 Hauptbohrung
2a Hauptbohrungsachse
3 Querausnehmung
3a Ausnehmungsachse
3b Ausnehmungslage
3c Ausnehmung
3d Ausnehmung
3e Ausnehmung
3f Ausnehmung
3g Ausnehmung
3h Ausnehmung
3i Ausnehmung
4 Ausnehmungskante
5 Winkel Ausnehmungsachse - Hauptbohrungsachse
6 Winkel Ausnehmungslage - Hauptbohrungsachse
7 Entgratwerkzeug
8 Grundkörper
9 Schaft
10 Messer 10', 10"
10a Schneide Rechtslauf
10b Schneide Linkslauf
11 Werkzeugachse
12 Drehrichtung Rechtslauf
13 Drehrichtung Linkslauf
14 Schneidenwinkel
15a Spanmulde Rechtslauf
15b Spanmulde Linkslauf
16 Steuerfläche
17 Orientierung Steuerfläche
18 Bogenhöhe Steuerfläche
19 Bogenradius Steuerfläche
20 Spanwinkel Spanmulde
21 Gleiterfläche
22 Radius Gleiterfläche
23 Schnittbewegung
24 Richtung
25 Verschneidungswinkel
26 Messerfenster
27 Steuerbolzen
28 Druckfeder
29 Pfeilrichtung
30 Steuerausnehmung
31 Pfeilrichtung
32 Abschlusskante
33 Position
34 Position
35 Rückseite
36 Stirnseite
37 Schneidseite
38 Vorschubrichtung a, b
39 Scheitelpunkt 39a, 39b
40 Schneidenradius
41 Oberseite
42 Unterseite
43 Abstand
44 Position
45 Position
46 Berührungslinie
47 Vorderkante von 4
48 Rückkante von 4

## Patentansprüche

1. Entgratwerkzeug (7) zur Entgratung der Kanten von Querausnehmungen (3, 3a-i), die von einer Hauptbohrung (2) ausgehen, bestehend aus einem um die Werkzeugachse (11) drehend angetriebenen Schaft (8, 9), der in Vorschubrichtung in die Hauptbohrung ein- und ausfahrbar ist, und an dessen unteren Ende mindestens ein Messerfenster (26) angeordnet ist, in dem mindestens ein annähernd senkrecht zur Werkzeugachse (11) federbelastetes Messer (10, 10', 10", 10‴, 10"") verschiebbar angeordnet ist, das an seinem vorderen Ende mindestens eine Schneide (10a, 10b) aufweist, die auf die Kante der Querausnehmung (3, 3a-i) auftrifft und diese entgratet, wobei das Messer (10, 10', 10", 10‴, 10"") aus zwei sich in Rotationsrichtung (12,13) gegenüberliegenden, bogenförmigen Schneiden (10a, 10b) besteht, **dadurch gekennzeichnet, dass** die Schneiden (10a, 10b) derart ausgebildet sind, dass sie gleichermaßen schneidend für den Rechts- und Linkslauf (12, 13) wirken, wobei die eine Schneide (10a) für den Rechtslauf (12) sowohl im Vorwärtslauf (38a) als auch im Rückwärtslauf schneidend ausgebildet ist, und die andere Schneide (10b) für den Linkslauf (13) sowohl im Vorwärtslauf (38a) als auch im Rückwärtslauf schneidend ausgebildet ist, und dass die beiden Schneiden (10a, 10b) mit ihren Schneidkanten im Winkel zwischen 5° bis 45° zur Werkzeugachse (11) und somit zur Längsachse (2a) der Hauptbohrung (2) schräg gestellt sind.

2. Entgratwerkzeug nach Anspruch 1, **dadurch gekennzeichnet, dass** die Schneiden (10a, 10b)
a) stetig fortlaufend und
b) konvex ausgebildet sind, sodass eine schälende, spanabhebende Entgratung der Kanten der Querausnehmung (3, 3a-i) stattfindet.

3. Entgratwerkzeug nach Anspruch 1 oder 2, **dadurch gekennzeichnet, dass** die zwei Schneiden (10a, 10b) aus zwei sich gegenüberliegenden Spanmulden (15a; 15b) und einer bogenförmig begrenzenden Steuerfläche (16) gebildet sind.

4. Entgratwerkzeug nach Anspruch 3, **dadurch gekennzeichnet, dass** eine Gleiterfläche (21) am Scheitelpunkt der Steuerfläche (16) angebracht ist und einen Radius (22) kleiner gleich dem halben Durchmesser der Hauptbohrung (2) aufweist.

5. Entgratwerkzeug nach einem der Ansprüche 2 oder 3, **dadurch gekennzeichnet, dass** der Bogenradius (19) der Steuerfläche (16) so bemessen ist, dass der Verschneidungswinkel (25) maximal 45° beträgt, so dass die jeweils wirkende Schneide (10a oder 10b) das Messer (10) entlang der Ausnehmungskante (4) radial in Richtung (24) in das Messerfenster (26) einschiebt.

6. Entgratwerkzeug nach einem der Ansprüche 1 bis 5, **dadurch gekennzeichnet, dass** der Scheitelpunkt des in der ausgefederten (aktiven) Position liegenden Messers (10) über den Durchmesser der Hauptbohrung (2) radial maximal um den Betrag der Bogenhöhe (18) der Steuerfläche (16) hinaus ragt.

7. Entgratwerkzeug nach einem der Ansprüche 1 bis 6, **dadurch gekennzeichnet, dass** im Messerfenster (26) zwei gleichartige Messer (10', 10") Rücken-an-Rücken verschiebbar gelagert sind.

8. Entgratwerkzeug nach einem der Ansprüche 1 bis 7, **dadurch gekennzeichnet, dass** im Schaft (9) des Entgratwerkzeugs (7) mehrere Messer (10‴, 10ʺʺ) im axialen Abstand (43) querverschiebbar gelagert sind.

9. Verfahren zum Betrieb eines Entgratwerkzeuges_zur Entgratung der Kanten von Querausnehmungen (3, 3a-i), die von einer Hauptbohrung (2) ausgehen, bestehend aus einem um die Werkzeugachse (11) drehend angetriebenen Schaft (8, 9), der in Vorschubrichtung in die Hauptbohrung (2) ein- und ausfahrbar ist, und an dessen unteren Ende mindestens ein Messerfenster (26) angeordnet ist, in dem mindestens ein annähernd senkrecht zur Werkzeugachse (11) federbelastetes Messer (10, 10', 10", 10‴, 10ʺʺ) verschiebbar angeordnet ist, das an seinem vorderen Ende zwei Schneiden (10a, 10b) aufweist, die auf die Kante der Querausnehmung (3, 3a-i) auftreffen und diese entgraten,
wobei die Entgratung von beliebig geformten Ausnehmungen (3) entlang der Hauptbohrung (2) beim längsseitigen Durchfahren der Hauptbohrung (2) nur im Rechtslauf (12) oder nur im Linkslauf (13) stattfindet, oder dass zunächst im Linkslauf (13) und dann im Rechtslauf (12) oder umgekehrt zunächst im Rechtslauf (12) und danach folgend im Linkslauf (13) entgratet wird,
**dadurch gekennzeichnet, dass**
das Messer (10, 10', 10", 10‴, 10"") mit beiden Schneiden (10a, 10b) sowohl im Rechtslauf als auch im Linkslauf gleichzeitig entgratet.

10. Verfahren nach Anspruch 9, **dadurch gekennzeichnet, dass** eine schälend wirkende Schnittbewegung (23) das Messer (10) radial in Richtung (24) in das Messerfenster (26) hinein schiebt und damit dessen Ausnehmungskanten entgratet.

11. Verfahren nach Anspruch 9 oder 10, **dadurch gekennzeichnet, dass** die zwei gegenüberliegenden Schneiden (10a und 10b) des Messers (10) den Grat von beiden Seiten ausgehend vom Zentrum der Ausnehmung (3, 3a-i) in Richtung zu den Ausnehmungskanten (4) entfernen.

12. Verfahren nach einem der Ansprüche 9 bis 11, **dadurch gekennzeichnet, dass** die zwei gegenüberliegenden Schneiden (10a und 10b) des Messers (10) den Grat von beiden Seiten ausgehend von ausserhalb der Ausnehmungskanten (4) in Richtung zum Ausnehmungszentrum entfernen.

13. Verfahren nach einem der Ansprüche 9 bis 12, **dadurch gekennzeichnet, dass** bei weiterem axialen Fortschreiten des drehend angetriebenen Entgratwerkzeuges (7) in die Hauptbohrung (2) dieses drehend in den Bereich einer Querausnehmung (3, 3a-3i) gelangt und dort die Ausnehmungskanten der Querausnehmungen (3, 3a-i) fortschreitend in Vorschubrichtung des Entgratwerkzeugs (7) entgratet.

14. Verfahren nach einem der Ansprüche 9 bis 13, **dadurch gekennzeichnet, dass** das Messer (10) durch ein Vorspannmittel federbelastet in seiner schneidenden Arbeitsstellung gehalten ist und beim Eintreten in die Hauptbohrung (2, 2a) federbelastet zurückweicht und beim Eintritt in eine an die Wandung der Hauptbohrung (2, 2a) anschliessenden Querausnehmung (3, 3a-3i) unter der Kraft des Vorspannmittels in eine aktive, schneidende Arbeitslage verschoben wird.

## Claims

1. Deburring tool (7) for deburring edges of transverse recesses (3, 3a-i), which start from a main bore (2), consisting of a shaft (8, 9) driven to be rotatable about the tool axis (11) and which can be moved into the main bore and out in advance direction, and on the lower end of which is arranged at least one blade window (26) in which at least one blade (10, 10', 10", 10‴, 10ʺʺ) spring-loaded approximately perpendicularly to the tool axis (11) is arranged to be displaceable, which has on its front end at least one cutting edge (10a, 10b) which meets the edge of the transverse recess (3, 3a-i) and deburrs the latter, wherein the blade (10, 10', 10", 10‴, 10ʺʺ) consists of two arc-like cutting edges (10a, 10b) opposing one another in rotation direction (12, 13), **characterised in that** the cutting edges (10a, 10b) are configured such that they act to be cutting equally for right-hand operation and left-hand operation (12, 13), wherein the one cutting edge (10a) is configured to be cutting for right-hand operation (12) both in forward operation (38a) and in rearward operation, and the other cutting edge (10b) is configured to be cutting for left-hand operation (13) both in forward operation (38a) and in rearward operation, and **in that** the two cutting edges (10a, 10b) are placed at an angle with their cutting edges at an angle between 5° to 45° to the tool axis (11) and hence to the longitudinal axis (2a) of the main bore (2).

2. Deburring tool according to claim 1, **characterised in that** the cutting edges (10a, 10b) are configured to be a) constantly continuous and b) convex so that paring, metal-cutting deburring of the edges of the transverse recess (3, 3a-i) takes place.

3. Deburring tool according to claim 1 or 2, **characterised in that** the two cutting edges (10a, 10b) are formed from two opposing metal-cutting depressions (15a; 15b) and an arc-like limiting control surface (16).

4. Deburring tool according to claim 3, **characterised in that** a sliding surface (21) is attached at the apex of the control surface (16) and has a radius (22) less than or equal to half the diameter of the main bore (2).

5. Deburring tool according to one of claims 2 or 3, **characterised in that** the arc radius (19) of the control surface (16) has dimensions so that the intersection angle (25) is 45° maximum so that the respectively acting cutting edge (10a or 10b) pushes the blade (10) into the blade window (26) along the recess edge (4) radially in direction (24).

6. Deburring tool according to one of claims 1 to 5, **characterised in that** the apex of the blade (10) lying in the rebounded (active) position projects beyond the diameter of the main bore (2) radially by the amount of the arc height (18) of the control surface (16) maximum.

7. Deburring tool according to one of claims 1 to 6, **characterised in that** two similar blades (10', 10") are mounted back-to-back to be displaceable in the blade window (26).

8. Deburring tool according to one of claims 1 to 7, **characterised in that** several blades (10‴, 10ʺʺ) are mounted to be transversely displaceable at axial distance (43) in the shaft (9) of the deburring tool (7).

9. Method of operating a deburring tool for deburring edges of transverse recesses (3, 3a-i), which start from a main bore (2), consisting of a shaft (8, 9) driven to be rotatable about the tool axis (11) and which can be moved into the main bore (2) and out in advance direction, and on the lower end of which is arranged at least one blade window (26) in which at least one blade (10, 10', 10", 10‴, 10ʺʺ) spring-loaded approximately perpendicularly to the tool axis (11) is arranged to be displaceable, which has on its front end two cutting edges (10a, 10b) which meet the edge of the transverse recess (3, 3a-i) and deburr the latter, wherein deburring of arbitrarily shaped recesses (3) along the main bore (2) takes place during longitudinal-side moving through the main bore (2) only in right-hand operation (12) or only in the left-hand operation (13), or deburring takes place first of all in left-hand operation (13) and then in right-hand operation (12) or vice versa first of all in right-hand operation (12) and following that in left-hand operation (13), **characterised in that** the blade (10, 10', 10", 10‴, 10ʺʺ) deburrs simultaneously using both cutting edges (10a, 10b) both in right-hand operation and in left-hand operation.

10. Method according to claim 9, **characterised in that** a paring-acting cutting movement (23) pushes the blade (10) into the blade window (26) radially in direction (24) and thus deburrs the recess edges thereof.

11. Method according to claim 9 or 10, **characterised in that** the two opposing cutting edges (10a and 10b) of the blade (10) remove the burr from both sides starting from the centre of the recess (3, 3a-i) in the direction of the recess edges (4).

12. Method according to one of claims 9 to 11, **characterised in that** the two opposing cutting edges (10a and 10b) of the blade (10) remove the burr from both sides starting from outside of the recess edges (4) in the direction of the recess centre.

13. Method according to one of claims 9 to 12, **characterised in that** during further axial advance of the deburring tool (7) driven to be rotatable into the main bore (2), the latter reaches in rotating manner the region of a transverse recess (3, 3a-3i) and deburrs the recess edges of the transverse recesses (3, 3a-i) there in advancing manner in advance direction of the deburring tool (7).

14. Method according to one of claims 9 to 13, **characterised in that** the blade (10) is held to be spring-loaded in its cutting operating position by a pretensioning means and when entering the main bore (2, 2a) withdraws in spring-loaded manner and when entering a transverse recess (3, 3a-3i) adjoining the wall of the main bore (2, 2a) is displaced into an active, cutting operating position under the force of the pretensioning means.

## Revendications

1. Outil d'ébarbage (7) destiné à ébarber les bords d'évidements transversaux (3, 3a - i) qui sortent d'un alésage principal (2), constitué d'une tige (8, 9) entraînée en rotation autour de l'axe d'outil (11), qui peut être rentrée dans l'alésage principal dans une direction d'avancement et peut en être sortie et sur l'extrémité inférieure de laquelle est disposée au moins une fenêtre de couteau (26), dans laquelle est disposé de manière à pouvoir coulisser au moins un couteau (10, 10', 10'', 10‴, 10ʺʺ) soumis à la contrainte d'un ressort à l'approche perpendiculairement à l'axe d'outil (11), lequel présente sur son extrémité avant au moins une lame (10a, 10b) qui rencontre le bord de l'évidement transversal (3, 3a - i) et l'ébarbe, dans lequel le couteau (10, 10', 10'', 10‴, 10ʺʺ) est constitué de deux lames (10a, 10b) en forme d'arc se faisant face dans la direction de rotation (12, 13), **caractérisé en ce que** les lames (10a, 10b) sont réalisées de sorte qu'elles exercent également une action coupante pour la marche à droite et la marche à gauche (12, 13), dans lequel une lame (10a) est réalisée avec une action coupante pour la marche à droite (12) à la fois lors de la marche avant (38a) et lors de la marche arrière et l'autre lame (10b) est réalisée avec une action coupante pour la marche à gauche (13) à la fois lors de la marche avant (38a) et lors de la marque arrière, et que les deux lames (10a, 10b) sont placées de manière oblique par leurs bords tranchants selon l'angle entre 5° à 45° par rapport à l'axe d'outil (11) et ainsi à l'axe longitudinal (2a) de l'alésage principal (2).

2. Outil d'ébarbage selon la revendication 1, **caractérisé en ce que** les lames (10a, 10b) sont réalisées
a) en continu et
b) de manière convexe, de sorte qu'un ébarbage par pelage, par enlèvement de copeaux des bords de l'évidement transversal (3, 3a - i) a lieu.

3. Outil d'ébarbage selon la revendication 1 ou 2, **caractérisé en ce que** les deux lames (10a, 10b) sont formées à partir de deux cavités (15a ; 15b) se faisant face et d'une surface de commande (16) de délimitation en forme d'arc.

4. Outil d'ébarbage selon la revendication 3, **caractérisé en ce qu'**une surface de patin (21) est disposée sur le point sommet de la surface de commande (16) et présente un rayon (22) inférieur ou égal à la moitié du diamètre de l'alésage principal (2).

5. Outil d'ébarbage selon l'une des revendications 2 ou 3, **caractérisé en ce que** le rayon d'arc (19) de la surface de commande (16) est dimensionné de sorte que l'angle d'intersection (25) est au maximum de 45° de sorte que la lame (10a ou 10b) qui agit respectivement insère par glissement le couteau (10) le long du bord d'évidement (4) radialement en direction (24) dans la fenêtre de couteau (26).

6. Outil d'ébarbage selon l'une des revendications 1 à 5, **caractérisé en ce que** le point sommet du couteau (10) situé dans la position (active) détendue dépasse au-delà du diamètre de l'alésage principal (2) radialement au maximum de la valeur de la hauteur d'arc (18) de la surface de commande (16).

7. Outil d'ébarbage selon l'une des revendications 1 à 6, **caractérisé en ce que** deux couteaux (10', 10'') similaires sont montés de manière à pouvoir coulisser dos à dos dans la fenêtre de couteau (26).

8. Outil d'ébarbage selon l'une des revendications 1 à 7, **caractérisé en ce que** plusieurs couteaux (10‴, 10ʺʺ) sont montés de manière à pouvoir coulisser transversalement à distance axiale (43) dans la tige (9) de l'outil d'ébarbage (7).

9. Procédé permettant de faire fonctionner un outil d'ébarbage destiné à ébarber les bords d'évidements transversaux (3, 3a - i), qui sortent d'un alésage principal (2), constitué d'une tige (8, 9) entraînée en rotation autour de l'axe d'outil (11), qui peut être rentrée dans la direction d'avancement dans l'alésage principal (2) et peut en être sortie et sur l'extrémité inférieure de laquelle est disposée au moins une fenêtre de couteau (26), dans laquelle au moins un couteau (10, 10', 10'', 10''', 10'''') soumis à la contrainte d'un ressort à l'approche perpendiculairement à l'axe d'outil (11) est disposé de manière à pouvoir coulisser, qui présente sur son extrémité avant deux lames (10a, 10b), qui rencontrent le bord de l'évidement transversal (3, 3a - i) et ébarbent celui-ci, dans lequel l'ébarbage d'évidements (3) de forme quelconque a lieu le long de l'alésage principal (2) lors du passage le long du côté longitudinal de l'alésage principal (2) seulement lors de la marche à droite (12) ou seulement lors de la marche à gauche (13), ou que l'ébarbage est effectué d'abord lors de la marche à gauche (13) puis lors de la marche à droite (12) ou inversement d'abord lors de la marche à droite (12) puis lors de la marche à gauche (13), **caractérisé en ce que** le couteau (10, 10', 10", 10‴, 10ʺʺ) procède à l'ébarbage simultanément avec les deux lames (10a, 10b) à la fois lors de la marche à droite et lors de la marche à gauche.

10. Procédé selon la revendication 9, **caractérisé en ce qu'**un déplacement de coupe (23) ayant une action de pelage pousse le couteau (10) radialement en direction (24) dans la fenêtre de couteau (26) et ébarbe ainsi ses bords d'évidement.

11. Procédé selon la revendication 9 ou 10, **caractérisé en ce que** les deux lames (10a et 10b) se faisant face du couteau (10) retirent la bavure des deux côtés en partant du centre de l'évidement (3, 3a - i) en direction des bords d'évidement (4).

12. Procédé selon l'une des revendications 9 à 11, **caractérisé en ce que** les deux lames (10a et 10b) se faisant face du couteau (10) retirent la bavure des deux côtés en partant de l'extérieur des bords d'évidement (4) en direction du centre d'évidement.

13. Procédé selon l'une des revendications 9 à 12, **caractérisé en ce que** lors de la progression axiale ultérieure de l'outil d'ébarbage (7) entraîné en rotation dans l'alésage principal (2), ce dernier parvient en rotation dans la zone d'un évidement transversal (3, 3a - i) et y ébarbe les bords d'évidement des évidements transversaux (3, 3a - i) progressivement dans la direction d'avancement de l'outil d'ébarbage (7).

14. Procédé selon l'une des revendications 9 à 13, **caractérisé en ce que** le couteau (10) est maintenu dans sa position de travail de découpage sous la contrainte d'un ressort par un moyen de précontrainte et recule sous la contrainte d'un ressort lors de l'entrée dans l'alésage principal (2, 2a) et est coulissé dans une position de travail active de découpage sous l'effet de la force du moyen de précontrainte lors de l'entrée dans un évidement transversal (3, 3a - 3i) situé dans le prolongement de la paroi de l'alésage principal (2, 2a).
